# EUROPÄISCHE PATENTANMELDUNG

(11) **EP 0 926 753 A2**
(43) Veröffentlichungstag der Anmeldung: **30.06.1999**
(21) Anmeldenummer: 98123148.3
(22) Anmeldetag: 04.12.1998
(51) Int. Cl.: H01M 4/88, H01M 8/10

(54) **Verfahren zur Herstellung von Funktionsschichten für Brennstoffzellen**

(30) Priorität: 23.12.1997 DE 19757492
(71) Anmelder: Deutsches Zentrum für Luft- und Raumfahrt e.V., 53175 Bonn (DE)
(72) Erfinder: Helmbold, Axel, 70197 Stuttgart (DE)
(74) Vertreter: Hoeger, Stellrecht & Partner

(57) **Zusammenfassung**

Um ein Verfahren zur Herstellung von Funktionsschichten für Brennstoffzellen, umfassend das Auftragen und Fixieren eines Elektrodenmaterials auf einer Trägerbahn derart zu verbessern, daß die auf die Trägerbahn aufgetragene Pulverschicht handhabbar ist, wird vorgeschlagen, daß das Elektrodenmaterial zu feinen trockenen Pulverpartikeln zerkleinert und zwischenlagerungsfrei in einen Gasstrom eingetragen wird, daß die trockenen Pulverpartikel mittels des Gasstroms beschleunigt werden und daß die beschleunigten Pulverpartikel aus dem Gasstrom aufgrund ihrer Massenträgheit im Bereich einer Umlenkung des Gasstroms ausgetragen und auf der Trägerbahn als Pulverschicht deponiert werden.

## Beschreibung

Bei den bislang bekannten Verfahren zur Herstellung von Funktionsschichten für Brennstoffzellen wurden beispielsweise die Materialien für die Herstellung einer Reaktionsschicht zu einer Suspension verrührt und die Suspension in pastenähnlicher Weise, beispielsweise im Siebdruckverfahren, Sprühverfahren oder durch Aufpinseln auf eine Trägerbahn aufgetragen.

Eine weitere Alternative, beispielsweise beschrieben in der US 4,313,972, sieht vor, als Trägerbahn eine solche aus porösem Material zu nehmen, so daß mittels eines durch die Trägerbahn hindurchgezogenen Gasstroms eine Deponierung der Pulverpartikel des Elektrodenmaterials auf der Trägerbahn möglich ist.

Abgesehen davon, daß eine Gleichverteilung der Pulverpartikel des Elektrodenmaterials auf der Trägerbahn mit diesem Verfahren schwierig zu realisieren ist, führt dieses Verfahren zu einer Pulverschicht, die so lose ist, daß sie eine Handhabung der Trägerbahn ohne daß nennenswerte Teile der Pulverschicht aufgrund eines Luftzugs in der Umgebung oder anderer Einflüsse entfernt werden, nicht möglich ist.

Der Erfindung liegt daher die Aufgabe zugrunde, ein Verfahren zur Herstellung von Funktionsschichten für Brennstoffzellen derart zu verbessern, daß die auf die Trägerbahn aufgetragene Pulverschicht handhabbar ist.

Diese Aufgabe wird bei einem Verfahren zur Herstellung von Funktionsschichten für Brennstoffzellen der eingangs beschriebenen Art erfindungsgemäß dadurch gelöst, daß das Elektrodenmaterial zu feinen trockenen Pulverpartikeln zerkleinert und zwischenlagerungsfrei in einen Gasstrom eingetragen wird, daß die trockenen Pulverpartikel mittels des Gasstroms beschleunigt werden und daß die beschleunigten Pulverpartikel aus dem Gasstrom aufgrund ihrer Massenträgheit im Bereich einer Umlenkung des Gasstroms ausgetragen und auf der Trägerbahn als Pulverschicht deponiert werden.

Der Vorteil der erfindungsgemäßen Lösung ist darin zu sehen, daß durch das Eintragen der Pulverpartikel in unmittelbarem Anschluß an das Zerkleinern eine Agglomeration der Pulverpartikel so gut als möglich vermieden wird und dann in dem Gasstrom die Pulverpartikel so beschleunigt werden, daß sie sich nachfolgend aufgrund ihrer Massenträgheit aus dem Gasstrom wiederum austragen und mit möglichst großer Geschwindigkeit auf der Trägerbahn als Pulverschicht deponieren lassen, wobei die möglichst große Geschwindigkeit, mit welcher die Pulverpartikel auf die Trägerbahn auftreffen, zu einer handhabbaren Pulverschicht führt, die sich einerseits bei der Handhabung nicht ablöst und andererseits beispielsweise auch vorteilhaft ohne Materialverschiebung und somit im wesentlichen frei von Welligkeiten kompaktieren läßt.

Eine besonders vorteilhafte Lösung sieht vor, daß das Elektrodenmaterial in einer Mahlkammer zerkleinert wird und somit eine Zerkleinerung des Elektrodenmaterials in die dann auf die Trägerbahn aufzutragenden Pulverpartikel im wesentlichen unmittelbar vor dem Eintragen der Pulverpartikel in den Gasstrom erfolgt.

Besonders günstig ist es dabei, wenn das Elektrodenmaterial von der Mahlkammer direkt in einen Bereich erhöhter Strömungsgeschwindigkeit des Gasstroms eingetragen wird, da damit in dem Bereich erhöhter Strömungsgeschwindigkeit eine sehr große Beschleunigung der Pulverpartikel erfolgt, die wiederum große Agglomerate zerstäubt und außerdem die Pulverpartikel bereits über kurze Strecken auf eine möglichst hohe Geschwindigkeit beschleunigt.

Das Elektrodenmaterial könnte beispielsweise durch Schwerkraft aus der Mahlkammer ausgetragen werden. Besonders günstig läßt sich das die Pulverpartikel aufweisende Elektrodenmaterial jedoch durch einen in die Mahlkammer eintretenden Ausblasgasstrom in den Gasstrom eintragen, damit einem derartigen Ausblasgasstrom die Pulverpartikel ohne große Agglomerate zu bilden aus der Mahlkammer in einfacher Weise entfernt werden können.

Besonders günstig ist es dabei, wenn der Ausblasgasstrom ein von dem Gasstrom abgezweigter Teilstrom ist, welcher dann in den Gasstrom zur Beschleunigung der Pulverpartikel des Elektrodenmaterials in einfacher Weise zurückgeführt werden kann.

Hinsichtlich der Umlenkung des Gasstroms wurden bislang keine näheren Angaben gemacht. Eine vorteilhafte Möglichkeit, den Gasstrom umzulenken, ist die, daß der Gasstrom durch eine Oberfläche der Trägerbahn umgelenkt wird und somit die durch die Massenträgheit aus dem Gasstrom ausgetragenen Partikel möglichst ungebremst auf der Trägerbahn auftreffen und die Pulverschicht bilden.

Dabei wäre es beispielsweise denkbar, den Gasstrom als Wirbelstrom auszubilden, welcher beispielsweise zum Teil durch eine gekrümmte Oberfläche der Trägerbahn geführt wird, so daß die Massenträgheit zu einer auf die Pulverpartikel wirkenden Zentrifugalkraft führt, die letztlich dann für das Austragen der Pulverpartikel aus dem Gasstrom verantwortlich wäre.

Besonders vorteilhaft ist es jedoch, wenn der Gasstrom mit einer ersten Strömungsrichtung im wesentlichen geradegerichtet auf die Oberfläche der Trägerbahn auftrifft und durch diese in eine zweite, quer zur ersten verlaufende Strömungsrichtung umgelenkt wird, so daß eine möglichst starke Umlenkung des Gasstroms mit einem möglichst kleinen Radius auftritt, die wiederum vorteilhafterweise zu einem sehr guten und räumlich begrenzten Austrag der Pulverpartikel führt.

Eine besonders vorteilhaft arbeitende Variante des erfindungsgemäßen Verfahrens sieht vor, daß die Pulverpartikel vor ihrem Auftreffen auf der Trägerbahn eine maximale Geschwindigkeit von mindestens 0,1m/sek, noch besser mindestens 0,2m/sek, aufweisen. Eine derartige Geschwindigkeit führt dann zu einer vorteilhaft handhabbaren Pulverschicht auf der Trägerbahn.

Um eine möglichst gleichmäßige Verteilung der Pulverpartikel des Elektrodenmaterials zu erreichen, ist vorzugsweise vorgesehen, daß das Elektrodenmaterial durch Aufweiten des Gasstroms in einer Aufweitrichtung auf der Trägerbahn verteilt wird.

Alternativ oder ergänzend hierzu ist es aber auch möglich, die Verteilung des Elektrodenmaterials durch eine Relativbewegung zwischen Gasstrom und Trägerbahn zu erhalten.

Eine besonders günstige Lösung sieht vor, daß die Relativbewegung zwischen Gasstrom und Trägerbahn quer zur Aufweitrichtung erfolgt, so daß einerseits eine Verteilung aufgrund eines Aufweitens des Gasstroms in einer Richtung und in der quer dazu verlaufenden Richtung eine Verteilung aufgrund der Relativbewegung erfolgt.

Eine günstige Möglichkeit, eine derartige Aufweitung des Gasstroms in einer Richtung zu erreichen sieht vor, daß das Elektrodenmaterial durch eine Flachstrahldüse für den Gasstrom geführt und durch diese der Gasstrom aufgeweitet wird.

Besonders günstige Strömungsverhältnisse werden mit einer Flachstrahldüse dann erreicht, wenn eine Austrittsöffnung der Flachstrahldüse in einem Abstand von der Trägerbahn gehalten wird, welcher mindestens ungefähr einer Breite der Austrittsöffnung entspricht. Eine derartige Positionierung der Austrittsöffnung der Flachstrahldüse erlaubt es, einerseits eine große Geschwindigkeit der durch Massenträgheit aus dem Gasstrom ausgetragenen Pulverpartikel zu erreichen und andererseits eine ausreichend verdichtete Pulverschicht auf der Trägerbahn.

Um aus der Pulverschicht die Funktionsschicht für eine Brennstoffzelle auf der Trägerbahn zu erhalten, ist vorzugsweise vorgesehen, daß die auf der Trägerbahn aufgetragene Pulverschicht aus Elektrodenmaterial kompaktiert wird.

Dabei kommt es nicht nur auf das Kompaktieren an, sondern vorteilhafterweise läßt sich das Kompaktieren so durchführen, daß das Elektrodenmaterial durch das Kompaktieren der Pulverschicht auf der Trägerbahn fixiert wird, so daß nicht nur die kompaktierte Schicht erhältlich ist, sondern gleichzeitig eine gute Fixierung derselben.

Die Fixierung läßt sich besonders günstig thermisch erreichen, nämlich dadurch, daß das Elektrodenmaterial so weit aufgeheizt wird, daß zumindest eine teilweise Erweichung von dessen Bestandteilen und/oder der Trägerbahn eintritt, die dann zu einer guten Kompaktierung und einer guten Fixierung führt.

Das Kompaktieren kann dabei auf unterschiedlichste Art und Weise erfolgen. Beispielsweise ist vorgesehen, daß die Elektrodenmaterialpulverschicht durch Verpressen Kompaktiert wird. Das Verpressen könnte beispielsweise flächig erfolgen. Besonders günstig ist es jedoch, wenn das Verpressen durch einen Walzvorgang erfolgt.

Hinsichtlich der Trägerbahn wurden bisher im einzelnen keine näheren Angaben gemacht.

So sieht ein besonders vorteilhaftes Ausführungsbeispiel vor, daß die Trägerbahn eine Membran einer Brennstoffzelle ist, wobei eine derartige Membran für eine Brennstoffzelle aufgrund ihrer benötigten Funktion gasundurchlässig ist.

Vorzugsweise ist dabei das Elektrodenmaterial ein solches Material, welches zur Herstellung einer Reaktionsschicht der Brennstoffzelle einsetzbar ist. Das heißt, daß in diesem Fall das Elektrodenmaterial einen Katalysator, einen Katalysatorträger und ein Hydrophobierungsmedium umfaßt, die alle miteinander gemischt sind.

Alternativ dazu ist es aber auch denkbar, daß das Elektrodenmaterial ein eine Gasdiffusionsschicht bildendes Material umfaßt, wobei dieses Material auch ebenfalls aus mehreren Komponenten bestehen kann. In diesem Fall wird dann das Elektrodenmaterial auf eine Trägerbahn aufgetragen, die beispielsweise durch die Membran und die auf dieser aufgetragene Reaktionsschicht gebildet ist.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine schematische Darstellung einer erfindungsgemäßen Brennstoffzelle mit deren Komponenten;

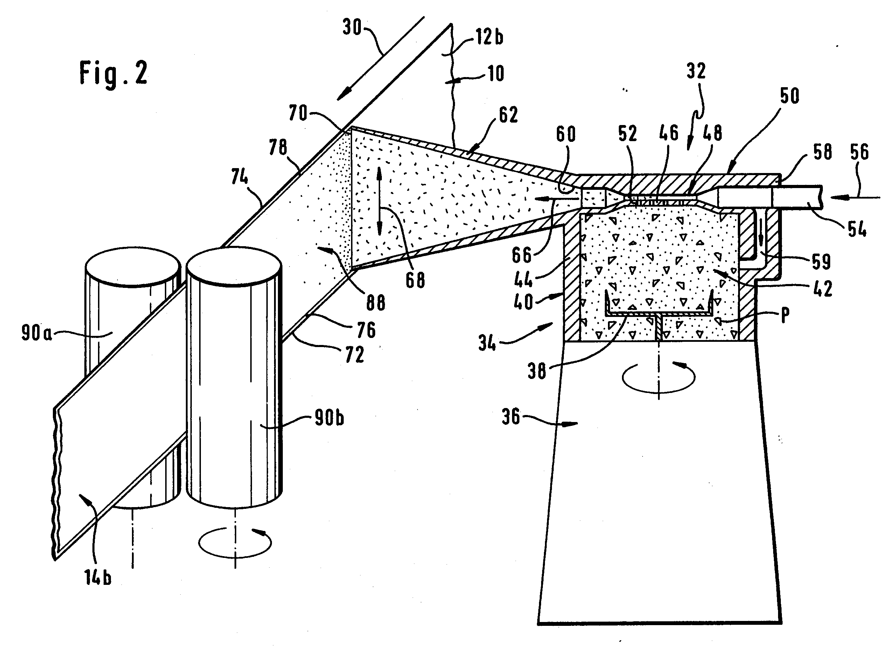

- Fig. 2: eine teilweise perspektivische, teilweise geschnittene Darstellung einer Vorrichtung zum Auftragen von Elektrodenmaterial;
- Fig. 3: eine ausschnittsweise vergrößerte Darstellung der Verhältnisse im Bereich nahe der als Trägerbahn dienenden Membran und
- Fig. 4: einen Schnitt längs Linie 4-4 in Fig. 3.

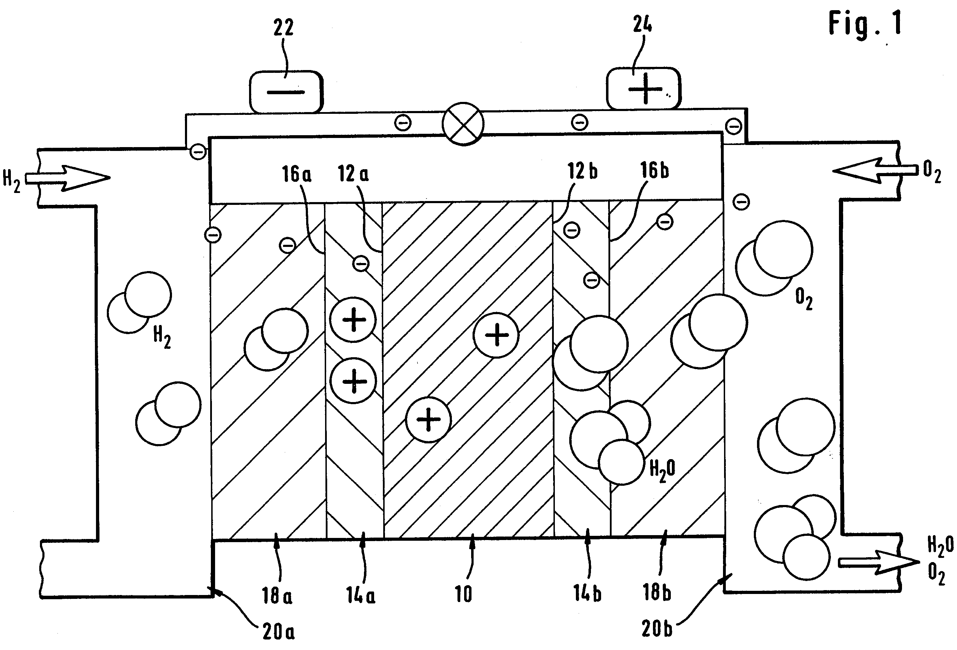

Eine Polymermembran-Brennstoffzelle, schematisch dargestellt in Fig. 1, umfaßt eine als Ganzes mit 10 bezeichnete Membran, welche auf einander gegenüberliegenden Oberflächen 12a, 12b eine eine Funktionsschicht darstellende Reaktionsschicht 14a, 14b trägt. Die Reaktionsschicht 14a, 14b ist auf ihrer jeweils der Membran 10 abgewandten Seite 16a, 16b mit einer ebenfalls eine Funktionsschicht darstellende Diffusionsschicht 18a, 18b versehen, durch welche die Reaktionsgase, im einen Fall Wasserstoff aus einem Gasverteiler 20a und im anderen Fall Sauerstoff aus einem Gasverteiler 20b, zu der Reaktionsschicht 14a, 14b hindurchdiffundieren.

Dadurch, daß der Wasserstoff in der Reaktionsschicht 14a Elektronen abgibt, durch die Membran 10 hindurchwandert und in der Reaktionsschicht 14b mit dem Sauerstoff Wasser bildet und wieder ein Elektron aufnimmt, ist ein Elektronenfluß von einer Anode 22 zu einer Kathode 24 nutzbar.

Zur Herstellung einer derartigen Membran 10 mit den Reaktionsschichten 14a, 14b wird die Membran 10 - wie in Fig. 1 dargestellt - in Richtung einer Förderrichtung 30 bewegt.

Dabei wird auf die Membran 10, beispielsweise auf deren Oberfläche 12b, die Reaktionsschicht 14b als dünne Schicht aufgetragen, wobei die Schichtdicke kleiner 400 µm ist.

Hierzu ist eine als Ganzes mit 32 bezeichnete Pulverauftragvorrichtung vorgesehen, welche eine Pulverzerkleinerungseinheit 34 aufweist, die beispielsweise als Messermühle ausgebildet ist und einen Antriebsmotor 36 aufweist, mit welchem ein Pulverzerkleinerer, beispielsweise ein Messersatz 38, antreibbar ist, der seinerseits in einer als Ganzes mit 40 bezeichneten Mahlkammer angeordnet ist.

Wird dieser Mahlkammer 40 bereits zerkleinertes, sogenanntes Elektrodenmaterialpulver zugeführt, so bewirkt der Messersatz 38 ein weiteres Durchmischen und Zerkleinern von Pulverpartikeln P dieses Elektrodenmaterials 42 in der Mahlkammer 40, wobei gleichzeitig der Messersatz 38 dafür sorgt, daß das sehr fein, beispielsweise auf eine mittlere Schichtdichte von kleiner 100 g/l zerkleinerte Pulver, nicht von selbst agglomeriert.

Die Mahlkammer 40 liegt dabei in einem Mahlkammergehäuse 44, welches an eine Wand 46 einer Venturidüse 50 angrenzt, wobei die Wand 46 mit Durchbrüchen 52 versehen ist, durch welche die fein zerkleinerten Pulverpartikel P aus der Mahlkammer 40 in die Verengung 48 der Venturidüse eintreten kann.

Der Venturidüse 50 wird ferner über eine Zuleitung 54 ein Trägergasstrom 56 auf einer Eingangsseite 58 derselben zugeführt, welcher durch die Venturidüse 50 hindurchströmt und mit einer Ausgangsseite 60 in eine als Ganzes mit 62 bezeichnete Flachstrahldüse übergeht.

Um die Pulverpartikel P in möglichst einfacher Weise aus der Mahlkammer 40 entfernen zu können, zweigt unmittelbar nahe der Eingangsseite 58 ein Teilstrom von dem Trägergasstrom 56 ab und ist durch einen Zweigkanal 59 in die Mahlkammer 40 geführt, um mit einem höheren Druck als in der Verengung 48 vorliegt, die Mahlkammer 40 zu beaufschlagen, wobei der Teilstrom durch die Mahlkammer 40 hindurchtritt, Pulverpartikel P mitnimmt und über die Durchbrüche 52 in die Verengung 48 und somit in den durch diese strömenden Trägergasstrom einträgt.

Die Flachstrahldüse 62 weitet den aus der Ausgangsseite 60 aus der Venturidüse 50 austretenden und Pulverpartikel P tragenden Gasstrom 66 in Richtung einer Querrichtung 68 auf, so daß sich eine Austrittsöffnung 70 der Flachstrahldüse in der Querrichtung 68 über einen wesentlichen Teil der Membran 10 zwischen deren Seitenkanten 72 und 74 bis zu Randbereichen 76 und 78 nahe dieser Seitenkanten 72 und 74 erstreckt.

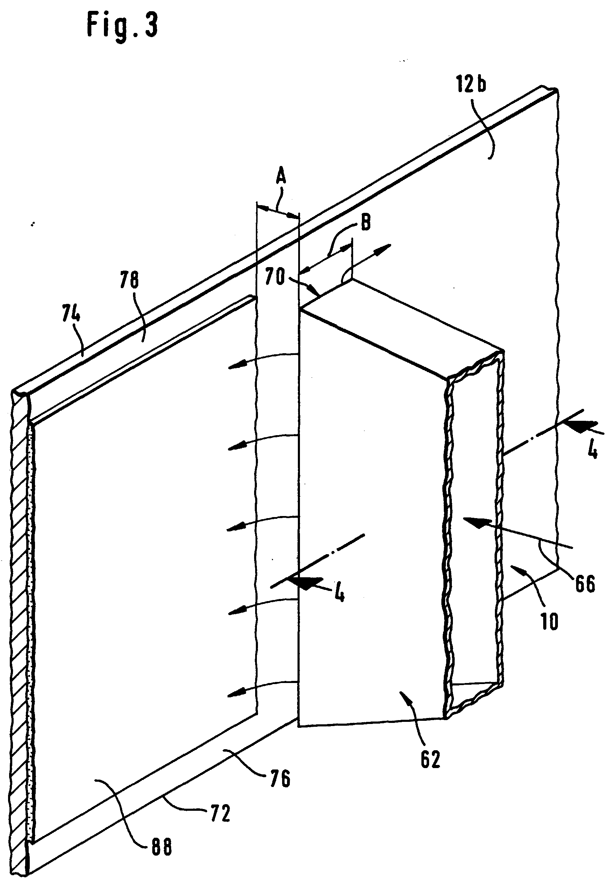

Wie in Fig. 3 nochmals vergrößert dargestellt, ist die Austrittsöffnung 70 in der Querrichtung 66 langgestreckt und weist in Richtung der Förderrichtung 30 der Membran 10 eine geringe Breite B auf.

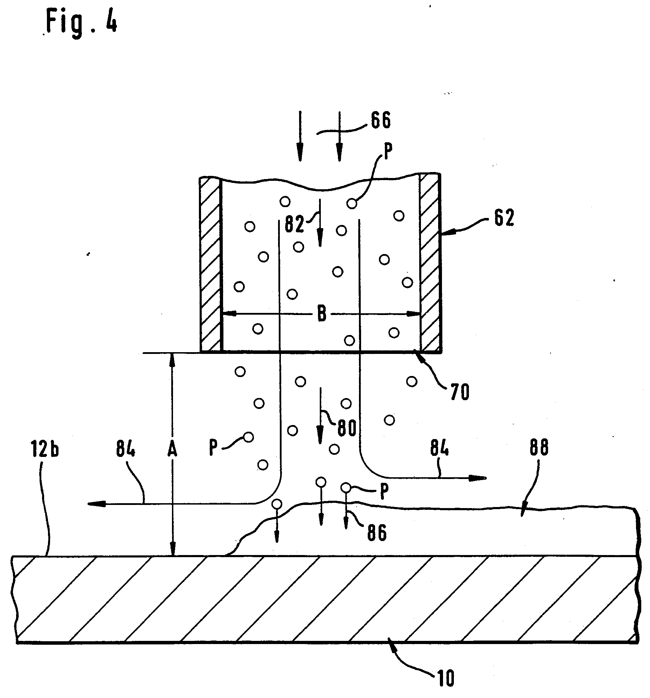

Ferner ist die Austrittsöffnung 70 in einem Abstand A von der Oberfläche 12b der Membran 10 angeordnet, welcher mindestens der Breite B der Austrittsöffnung 70 entspricht, wie in Fig. 3 und 4 im Detail dargestellt.

Der die Pulverpartikel P tragende Gasstrom 66 tritt aus der Austrittsöffnung 70 der Flachstrahldüse 62 aus und bereitet sich dabei zunächst geradlinig in einer ersten Richtung 80 aus, welche mit einer Führungsrichtung 82 der Flachstrahldüse 62 für den Gasstrom 66 zusammenfällt.

Durch die Oberfläche 12b der gasdurchlässigen Membran 10 erfährt jedoch der Trägergasstrom 66 eine Umlenkung in eine zweite Richtung 84, wobei die zweite Richtung 84 quer zur ersten Richtung 80 und beispielsweise ungefähr parallel zur Oberfläche 12b der Membran 10 verläuft.

Durch diese plötzliche Umlenkung des Trägergasstroms 66 mit den Pulverpartikeln P nahe der Oberfläche 12b bewegen sich die Pulverpartikel P in einer Deponierrichtung 86, welche ungefähr. parallel zur ersten Richtung 80 verläuft, weiter aus und lagern sich auf der Oberfläche 12b der Membran in Form einer Pulverschicht 88 ab.

Die Pulverschicht 88 umfaßt dabei beispielsweise das für die Reaktionsschicht 14b notwendige Material.

Die Pulverschicht 88 wird dann, wie in Fig. 1 dargestellt, beispielsweise durch zwei Walzen 90a, 90b, zwischen denen die Membran 10 mit der Pulverschicht 88 hindurchgeführt wird, kompaktiert und gleichzeitig auf der Membran 10 fixiert, so daß schließlich die Reaktionsschicht 14b entsteht, deren Dicke kleiner ungefähr 100 µm ist.

Von den Walzen 90a, 90b ist vorzugsweise die Walze 90b, welche unmittelbar auf die Pulverschicht 88 wirkt, beheizt, um das Pulver der Pulverschicht 88 soweit zu erwärmen, daß die gewünschten Phasengrenzen zwischen der Pulverschicht und der Membran 10 entstehen.

Beispielsweise kommt dabei als Elektrodenmaterialpulver, welches letztlich die Reaktionsschicht 14b ergeben soll, ein Pulver zur Verwendung, daß einen mit einem Katalysator versehenen Katalysatorträger und ein Hydrophobierungsmedium umfaßt.

Als Katalysatorpartikel werden beispielsweise Kohlenstoffpartikel eingesetzt, versehen mit Platin oder Ruthenium oder Legierungen von beiden als Katalysator, wobei diese Partikel eine mittlere Korngröße von ungefähr 30 nm bis ungefähr 200 µm aufweisen.

Als Hydrophobierungsmedium wird beispielsweise Polytetrafluorethylen eingesetzt, wobei die mittlere Korngröße des Hydrophobierungsmediums ebenfalls in einem Bereich von ungefähr 100 nm bis ungefähr 100 µm liegt.

Das Elektrodenmaterialpulver umfaßt vorzugsweise 80 Gewichtsprozent Katalysator und Katalysatorträger und 20 Gewichtsprozent Hydrophobierungsmedium. Dabei beträgt der Anteil des Katalysators 10 bis 40 Gewichtsprozent bezogen auf die Gesamtmasse von Katalysator und Katalysatorträger.

Hinzu kommen können Füllmaterialien. Als Füllmaterial wird vorzugsweise ein Salz verwendet. Die mittlere Korngröße entspricht vorzugsweise der des Hydrophobierungsmediums. Der Gewichtsanteil des Füllmaterials liegt günstigerweise bei weniger als 50 Gewichtsprozent des Elektrodenmaterialpulvers mit Füllmaterial.

Dieses Elektrodenmaterialpulver wird von einer Mischvorrichtung einer Siebvorrichtung und dann der Mahlkammer 40 zugeführt.

Es ist aber auch denkbar, als Pulver nicht das Elektrodenmaterialpulver zu nehmen, sondern beispielsweise eine bereits mit der Reaktionsschicht 14b versehene Membran als Trägerbahn einzusetzen und auf diese als Pulver das für die Diffusionsschicht 18b vorgesehene Material mittels der Pulverauftragsvorrichtung 32 in Form einer Pulverschicht aufzutragen und anschließend ebenfalls mit den Walzen 90a, b zu kompaktieren und auf der Reaktionsschicht 14b zu fixieren.

## Patentansprüche

1. Verfahren zur Herstellung von Funktionsschichten für Brennstoffzellen, umfassend das Auftragen und Fixieren eines Elektrodenmaterials auf einer Trägerbahn, **dadurch gekennzeichnet,** daß das Elektrodenmaterial zu feinen trockenen Pulverpartikeln zerkleinert und zwischenlagerungsfrei in einen Gasstrom eingetragen wird, daß die trockenen Pulverpartikel mittels des Gasstroms beschleunigt werden und daß die beschleunigten Pulverpartikel aus dem Gasstrom aufgrund ihrer Massenträgheit im Bereich einer Umlenkung des Gasstroms ausgetragen und auf der Trägerbahn als Pulverschicht deponiert werden.

2. Verfahren nach Anspruch 1, dadurch gekennzeichnet, daß das Elektrodenmaterial in einer Mahlkammer zerkleinert wird.

3. Verfahren nach Anspruch 1 oder 2, dadurch gekennzeichnet, daß das Elektrodenmaterial von der Mahlkammer direkt in einen Bereich erhöhter Strömungsgeschwindigkeit des Gasstroms eingetragen wird.

4. Verfahren nach Anspruch 2 oder 3, dadurch gekennzeichnet, daß das Elektrodenmaterial durch einen in die Mahlkammer eintretenden Ausblasgasstrom in den Gasstrom eingetragen wird.

5. Verfahren nach Anspruch 4, dadurch gekennzeichnet, daß der Ausblasgasstrom ein von dem Gasstrom abgezweigter Teilstrom ist.

6. Verfahren nach einem der voranstehenden Ansprüche, dadurch gekennzeichnet, daß der Gasstrom durch eine Oberfläche der Trägerbahn umgelenkt wird.

7. Verfahren nach Anspruch 6, dadurch gekennzeichnet, daß der Gasstrom mit einer ersten Strömungsrichtung im wesentlichen geradegerichtet auf die Oberfläche der Trägerbahn auftrifft und durch diese in eine zweite, quer zur ersten verlaufende Richtung umgelenkt wird.

8. Verfahren nach einem der voranstehenden Ansprüche, dadurch gekennzeichnet, daß die Pulverpartikel des Elektrodenmaterials durch Aufweiten des Gasstroms in einer Aufweitrichtung auf der Trägerbahn verteilt werden.

9. Verfahren nach einem der voranstehenden Ansprüche, dadurch gekennzeichnet, daß die Pulverpartikel des Elektrodenmaterials durch eine Relativbewegung des Gasstroms zur Trägerbahn verteilt werden.

10. Verfahren nach Anspruch 9, dadurch gekennzeichnet, daß die Relativbewegung zwischen dem Gasstrom und der Trägerbahn quer zur Aufweitrichtung erfolgt.

11. Verfahren nach einem der voranstehenden Ansprüche, dadurch gekennzeichnet, daß die Pulverpartikel des Elektrodenmaterials durch eine Flachstrahldüse für den Gasstrom geführt werden.

12. Verfahren nach Anspruch 11, dadurch gekennzeichnet, daß die Austrittsöffnung der Flachstrahldüse in einem Abstand von der Trägerbahn geführt wird, der mindestens ungefähr einer Breite der Austrittsöffnung entspricht.

13. Verfahren nach einem der voranstehenden Ansprüche, dadurch gekennzeichnet, daß die auf die Trägerbahn aufgetragene Pulverschicht des Elektrodenmaterials kompaktiert wird.

14. Verfahren nach Anspruch 13, dadurch gekennzeichnet, daß das Elektrodenmaterial durch kompaktieren der Pulverschicht auf der Trägerbahn fixiert wird.

15. Verfahren nach Anspruch 13 oder 14, dadurch gekennzeichnet, daß das Elektrodenmaterial durch Verpressen kompaktiert wird.

16. Verfahren nach einem der Ansprüche 13 bis 15, dadurch gekennzeichnet, daß die Pulverschicht des Elektrodenmaterials durch einen Walzvorgang kompaktiert wird.

17. Verfahren nach einem der voranstehenden Ansprüche, dadurch gekennzeichnet, daß die Trägerbahn eine Membran für die Brennstoffzelle ist.

18. Verfahren nach einem der voranstehenden Ansprüche, dadurch gekennzeichnet, daß das Elektrodenmaterial das für eine Reaktionsschicht erforderliche Material umfaßt.

19. Verfahren nach Anspruch 18, dadurch gekennzeichnet, daß das für die Reaktionsschicht erforderliche Material einen Katalysator, einen Katalysatorträger und ein Hydrophobierungsmedium umfaßt.

20. Verfahren nach einem der voranstehenden Ansprüche, dadurch gekennzeichnet, daß das Elektrodenmaterial ein eine Gasdiffusionsschicht bildendes Material umfaßt.
